# EUROPEAN PATENT APPLICATION

(11) **EP 2 194 265 A2**
(43) Date of publication of application: **09.06.2010**
(21) Application number: 09176315.1
(22) Date of filing: 18.11.2009
(51) Int. Cl.: F03D 1/00

(54) **Wind turbine with improved tower and method of assembling same**

(30) Priority: 02.12.2008 US 326150
(71) Applicant: General Electric Company, Schenectady, NY 12345 (US)
(72) Inventor: Sathian, Sujith, Simpsonville, SC 29681 (US)
(74) Representative: Bedford, Grant Richard

(57) **Abstract**

A wind turbine (100) and method for assembling a wind turbine is provided. The wind turbine is configured to stand on a foundation, and the wind turbine assembly includes a tower (102) and an elevated tower foundation (300). The elevated tower foundation (300) has multiple support members having a plurality of main support members (320) and a plurality of bracing members (340). The bracing members (340) are connected to the main support members (320). The tower (102) is mounted on the elevated tower foundation (300).

## Description

The field of this disclosure relates generally to wind turbines, and more particularly to a tower for a wind turbine.

Wind turbines are increasingly used for the generation of electrical energy. A wind turbine typically comprises a rotor-driven turbine generator mounted atop a tower constructed of multiple tower sections that are stacked and secured together. These sections may be cylindrical, frusto-conical or other suitable shape, and may be generally solid, tubular, or lattice-type sections. For example, one conventional wind turbine assembly includes a tower in which multiple tower sections each comprise a single-piece cylindrical or frusto-conical steel section. These sections are joined together to reach above ground a height sufficient to provide clearance for the turbine blades and to support the generator at an altitude where there are sufficient wind velocities for adequate power generation. Many towers for utility grade wind turbines are about 80 meters in height.

The lowermost tower section (often referred to as a base section) of the wind turbine assembly tower is secured to the foundation (e.g., a concrete slab or other suitable foundation). The diameter of each tower section, and in particular the base section must be large enough in cross-section (e.g., diameter) to withstand the aerodynamic loads produced by wind forces and gravitational loads that are imposed by the mass of the heavy turbine generator and the drive sections of the turbine. As wind turbine towers have become increasingly taller, the cross-sectional dimensions of the tower base section has created difficulties in the ground transportation (e.g., by truck or rail) of these base sections due to size limitations or roadways, bridges and tunnels through which these sections must pass in route to their assembly destination. For example, if the diameter of the tower is greater than 4.3 meters, difficulty may be encountered during ground transport. Manufacturing difficulties can also arise when the thickness of the tower wall is greater than about 40 mm (e.g., problems with steel plate rolling and accurately obtaining plate gap tolerance).

Wind turbine tower manufacturers have had to use other means, such as increasing the shell thicknesses of the sections or using guy wires, to hold smaller cross-sectioned towers in place and support the tower against the aerodynamic and structural loads encountered by the tower. While these measures have been helpful, they have their limits and have not sufficiently met the need for a wind turbine tower of greater height that is also capable of ground transport. It has been heretofore un-economical to construct and transport towers greater than about 80 to about 100 meters in height.

In one aspect of the present invention, a wind turbine assembly is provided and configured to stand on a foundation. The wind turbine assembly includes a tower and an elevated tower foundation. The elevated tower foundation has multiple support members having a plurality of main support members and a plurality of bracing members. The bracing members are connected to the main support members. The tower is mounted on the elevated tower foundation.

In another aspect of the present invention, a method of fabricating a wind turbine tower includes the steps of shipping tower components to a wind turbine location. At least some of the tower components are shipped in an un-assembled state. The next step includes assembling the tower components to form an upper tower portion and a lower tower portion. A placing step places the lower tower portion on one or more foundation elements. A subsequent step includes placing the upper tower portion on the lower tower portion.

Various aspects and embodiment of the present invention will now be described in connection with the accompanying drawings, in which:
Fig. 1 is a schematic elevation of one embodiment of a wind turbine assembly mounted on a foundation by a tower mount;
Fig. 2 is a perspective view of one embodiment of the tower mount of the wind turbine assembly of Fig. 1; and
Fig. 3 is a perspective view of one embodiment of an elevated tower foundation that can be used with a conventional wind turbine tower.

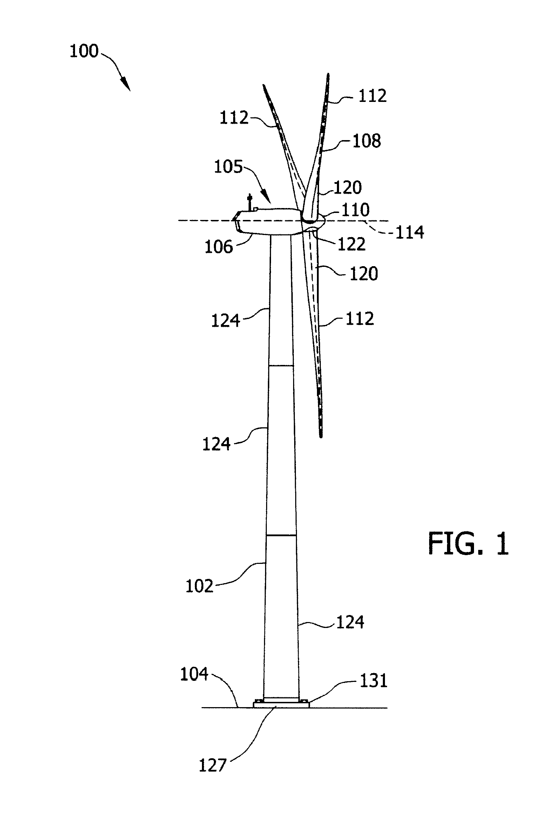

Referring now to the drawings and in particular to Figure 1, one known wind turbine is indicated generally at 100. In this embodiment, wind turbine assembly 100 comprises a horizontal axis 114 wind turbine. Alternatively, wind turbine assembly 100 may comprise a vertical axis wind turbine. Wind turbine assembly 100 generally comprises a tower 102 standing upright on a suitable foundation 104 (e.g., a concrete slab, ground surface or other suitable foundation), and a wind turbine generator, generally indicated at 105. Wind turbine generator 105 generally comprises a nacelle 106 mounted on tower 102, and a rotor 108 coupled to nacelle 106. Rotor 108 has a rotatable hub 110 and a plurality of rotor blades 112 coupled to hub 110. Illustrated rotor 108 comprises three rotor blades 112. Alternatively, rotor 108 may have more or less than three rotor blades 112. Blades 112 are positioned about rotor hub 110 to facilitate rotating rotor 108 to transfer kinetic energy from the wind into usable mechanical energy, and subsequently, electrical energy. Blades 112 are mated to hub 110 by coupling a blade root portion 120 to hub 110 at a plurality of load transfer regions 122. Load transfer regions 122 have a hub load transfer region and a blade load transfer region (both not shown in Figure 1). Loads induced in blades 112 are transferred to hub 110 via load transfer regions 122.

Tower 102 is tubular, and in the illustrated embodiment it is annular and has an internal cavity (not shown) extending longitudinally within tower 102 from foundation 104 up to nacelle 106. Tower 102 generally comprises a plurality of individual tower sections 124 that are connectable to each other in a stacked, end-to-end (e.g., one on top of the other) relationship to form tower 102. Tower sections 124 may each be of generally constant transverse cross-sectional dimension (e.g., a constant diameter in the illustrated embodiment in which tower sections 124 are each generally annular), or one or more of tower sections 124 may be frusto-conical, and/or the transverse cross-sectional dimension of one or more of tower sections 124 may be constant but different from that of one or more of the other tower sections - such as in a stepped configuration in which the transverse cross-sectional dimension of each tower section 124 decreases as the sections are stacked toward to the top of tower 102.

In addition, the present invention can be used with towers of many shapes, including but not limited to, tubular, cylindrical, conical, frusto-conical, frustum, elliptical and rectangular shaped towers. The present invention can also be used with towers constructed as lattices, free standing lattices, cantilevered pipe, tubular and guyed lattice or poles, as well as other suitable towers. In known towers, a highest height obtainable has been about 80 to 100 meters.

As illustrated in Fig. 1, a known tower mount 127 is seated on and suitably secured to foundation 104 for supporting tower 102. The tower mount 127 can also be referred to as a foundation mounting piece (FMP). The tower can be bolted to the FMP directly. However, towers mounted on a FMP can add cost and result in more expensive wind turbines. Alternatively, a wind turbine tower can be attached directly to the base, and this type of mount can be referred to as an anchor type design. In the anchor type the tower base is bolted to the concrete base/foundation using anchor bolts.

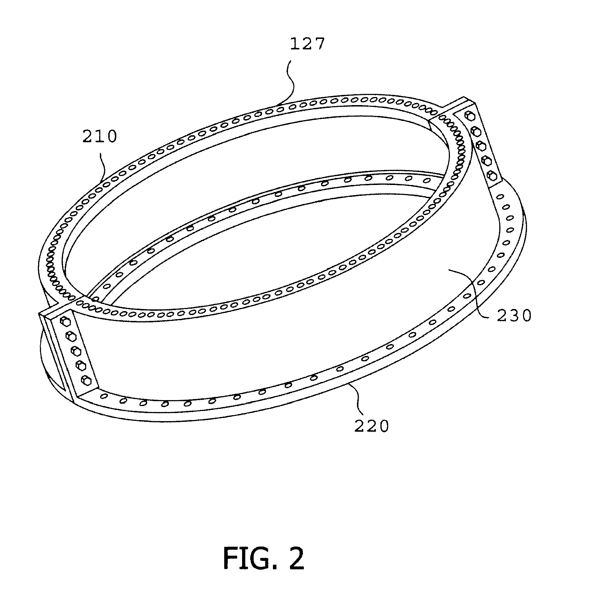

With particular reference to Fig. 2, tower mount 127 is generally tubular in the manner of tower sections 124, and in the illustrated embodiment it is generally annular, and has an upper end 210, a lower end 220 (shown in Fig. 2) and a circumferential sidewall 230 (shown in Fig. 2) extending therebetween. The terms upper and lower are used herein with reference to the orientation of tower 102 as illustrated in Fig. 1. Lower end 220 is suitably configured for use in securing tower mount 127 to foundation 104.

It would be advantageous if a higher tower could be designed to take advantage of higher mean wind speeds at higher elevations. An improved tower is herein described that can be used alone or in conjunction with known wind turbine towers to obtain wind turbine towers of about 120 to about 150 meters or more in height. In addition, the present invention can be used with towers that are fastened to foundation mounting pieces or towers incorporating the aforementioned anchor type design.

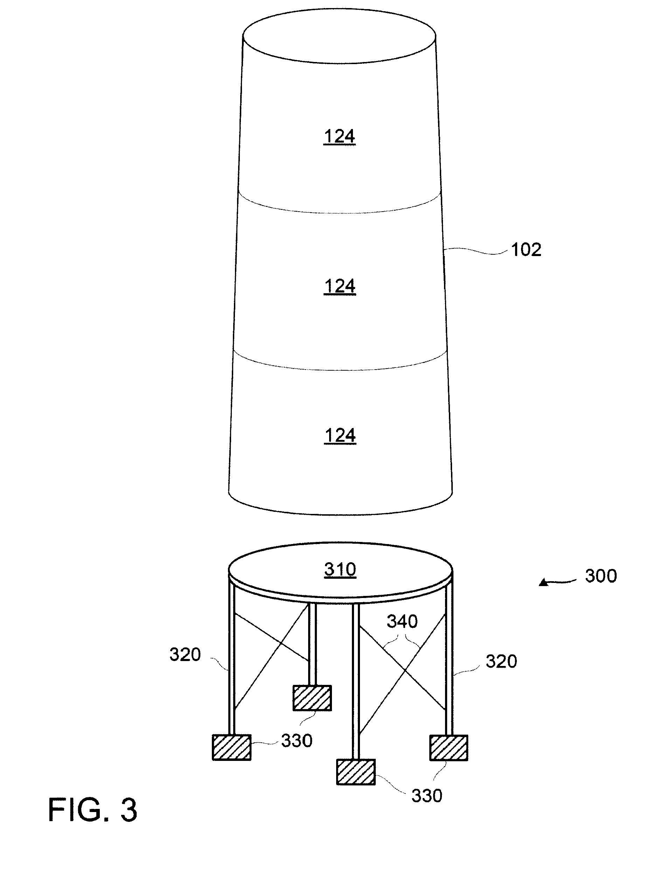

Fig. 3 illustrates a perspective view of an improved wind turbine tower assembly according to aspects of the present invention. In this embodiment a conventional tower 102 having multiple sections 124 may be used, although not required, with elevated foundation 300. The elevated foundation can be comprised of tower mount or tower flange 310, pole supports 320, foundation supports 330 and bracing members 340.

Elevated foundation may be configured to have a height of about 20 to about 60 meters or more. Heights below or above this range are also possible, and the specific height is guided by location specific requirements. A conventional 80 to 100 meter tower 102, which is a tubular wind tower structure, can be mounted to the elevated foundation 300 via tower mount 310. The elevated foundation 300 can be fabricated from seamless or fabricated pipes or tubes and/or I-beams (or other beams), and may incorporate intervening bracing members 340 (e.g., stiffeners and cross-members) for better rigidity.

The tower mount 310 may comprise one or more elements and can be configured similar to the tower mount 127 shown in Fig. 2. The tower 102 can be bolted an/or welded to tower mount 310.

The pole supports 320 can be made from seamless pipes that can be directly shipped to wind turbine sites and can be welded and assembled on-site. In this manner, a large tower foundation 300 may be easily shipped to remote wind turbine sites, thereby avoiding logistical and transportation issues. Once the elevated foundation 300 is installed at the site then a conventional tower 102 can be fastened (e.g., bolted) to the tower mount 310.

Foundation supports 330 may comprise reinforced concrete or other suitable material. One foundation support is shown under each pole support 320, however, it is to be understood that one or more foundation supports could be used. For example, a single foundation support or reinforced concrete could be configured to support all the pole supports 320.

The bracing members 340 provide rigidity and stiffness between pole supports 320. The bracing members can be easily attached to the pole supports with fasteners and/or welding. For the sake of clarity, only a few bracing members 340 are shown, however, it is to be understood that one or more bracing members 340 may connect some or all of pole supports 320.

According to one aspect of the present invention, pole supports may be constructed from seamless pipes of about 30 meters in length and about 1 to 2 meters in diameter. The pipes can be welded gas metal arc welding (GMAW), pulsed GMAW, shielded metal arc welding (SMAW), flux cored arc welding, or any other suitable automatic or manual welding processes. The bracing members may be attached to the pole supports using any of the above welding techniques or via any suitable fastener.

Various aspects of the present invention provide many advantages which include, but are not limited to, use of conventional wind turbine towers on elevated foundation, ease of transportation of tower components, reduced cost of materials and ease of assembly.

When introducing elements of the present invention or preferred embodiments thereof, the articles "a", "an", "the", and "said" are intended to mean that there are one or more of the elements. The terms "comprising", "including", and "having" are intended to be inclusive and mean that there may be additional elements other than the listed elements.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

As various changes could be made in the above constructions and methods without departing from the scope of the invention, it is intended that all matter contained in the above description and shown in the accompanying drawings shall be interpreted as illustrative and not in a limiting sense.

Various aspects and embodiments of the present invention are defined by the following numbered clauses:
1. A wind turbine assembly configured for standing on a foundation, the wind turbine assembly comprising:
   a tower;
   an elevated tower foundation having multiple support members, said multiple support members comprising a plurality of main support members and a plurality of bracing members connected to said main support members;
   wherein, said tower is mounted on said elevated tower foundation.
2. A wind turbine assembly in accordance with Clause 1, wherein the tower is comprised of a plurality of tower segments.
3. A wind turbine assembly in accordance with any preceding Clause, wherein the tower has at least one of the following shapes:
   tubular, cylindrical, conical, frusto-conical, frustum, elliptical and rectangular.
4. A wind turbine assembly in accordance with any preceding Clause, wherein the tower is constructed as one or more of the following:
   lattice, free standing lattice, pipe, cantilevered pipe, tubular, guyed lattice and guyed poles.
5. A wind turbine assembly in accordance with any preceding Clause, wherein said elevated tower foundation is configured to be about 20 to about 60 meters in height.
6. A wind turbine assembly in accordance with any preceding Clause, wherein said elevated tower foundation is configured to be about 20 meters or more in height.
7. A wind turbine assembly in accordance with any preceding Clause, wherein said plurality of main support members are comprised of one or more of the following group:
   fabricated pipes, seamless pipes, fabricated tubes, seamless tubes, beams, and fabricated beams.
8. A wind turbine assembly in accordance with any preceding Clause, wherein said plurality of bracing members are comprised of one or more of the following group:
   fabricated pipes, seamless pipes, fabricated tubes, seamless tubes, beams, and fabricated beams.
9. A wind turbine assembly in accordance with any preceding Clause, wherein said elevated tower foundation is assembled by welding or fastening said plurality of main support members and said plurality of bracing members at or near the location of a wind turbine.
10. A wind turbine assembly in accordance with any preceding Clause, wherein said tower is about 80 to about 100 meters in height, and said elevated tower foundation is configured to be about 20 to about 60 meters in height.
11. A wind turbine assembly in accordance with any preceding Clause, wherein said tower is about 80 to about 100 meters in height, and said elevated tower foundation is configured to be about 20 meters or more in height.
12. A wind turbine assembly in accordance with any preceding Clause, further comprising:
   a foundation for supporting said elevated tower foundation.
13. A wind turbine assembly in accordance with any preceding Clause, wherein said foundation is comprised of a plurality of foundation elements, said plurality of foundation elements supporting said plurality of main support members.
14. A method of fabrication a wind turbine tower comprising the steps of:
   shipping tower components to a wind turbine location, at least some of said tower components shipped in an un-assembled state;
   assembling said tower components to form an upper tower portion and a lower tower portion;
   placing said lower tower portion on one or more foundation elements;
   placing said upper tower portion on said lower tower portion.
15. The method of clause 14, wherein said upper tower portion is comprised of about two to about four tower sections, said upper tower portion having a height of about 80 to about 100 meters.
16. The method of clause 14 or 15, wherein said lower tower portion is comprised of a plurality of main support members and a plurality of bracing members connected to at least some of said main support members, said lower tower portion having a height of about 20 to about 60 meters.
17. The method of any of clauses 14 to 16, wherein said main support members are assembled by welding.
18. The method of any of clauses 14 to 17, wherein said bracing members are assembled by welding.
19. The method of any of clauses 14 to 18, wherein said upper tower portion is attached to said lower tower portion via a tower mounting flange.

## Claims

1. A wind turbine assembly configured for standing on a foundation, the wind turbine assembly comprising:
a tower (102);
an elevated tower foundation (300) having multiple support members, said multiple support members comprising a plurality of main support members (320) and a plurality of bracing members (340) connected to said main support members;
wherein, said tower (102) is mounted on said elevated tower (102) foundation (300).

2. A wind turbine assembly in accordance with Claim 1, wherein the tower (102) is comprised of a plurality of tower segments (124).

3. A wind turbine assembly in accordance with any preceding Claim, wherein the tower (102) has at least one of the following shapes:
tubular, cylindrical, conical, frusto-conical, frustum, elliptical and rectangular.

4. A wind turbine assembly in accordance with any preceding Claim, wherein the tower (102) is constructed as one or more of the following:
lattice, free standing lattice, pipe, cantilevered pipe, tubular, guyed lattice and guyed poles.

5. A wind turbine assembly in accordance with any preceding Claim, wherein said elevated tower foundation (300) is configured to be about 20 to about 60 meters in height.

6. A wind turbine assembly in accordance with any preceding Claim, wherein said elevated tower foundation (300) is configured to be about 20 meters or more in height.

7. A wind turbine assembly in accordance with any preceding Claim, wherein said plurality of main support members (320) are comprised of one or more of the following group:
fabricated pipes, seamless pipes, fabricated tubes, seamless tubes, beams, and fabricated beams.

8. A wind turbine assembly in accordance with any preceding Claim, wherein said plurality of bracing members (340) are comprised of one or more of the following group:
fabricated pipes, seamless pipes, fabricated tubes, seamless tubes, beams, and fabricated beams.

9. A wind turbine assembly in accordance with any preceding Claim, wherein said elevated tower foundation (300) is assembled by welding or fastening said plurality of main support members (320) and said plurality of bracing members (340) at or near the location of a wind turbine.

10. A wind turbine assembly in accordance with any preceding claim, wherein said tower (102) is about 80 to about 100 meters in height, and said elevated tower foundation (300) is configured to be about 20 meters or more in height.
